# EUROPEAN PATENT SPECIFICATION

(11) **EP 2 495 812 B1**
(45) Date of publication and mention of the grant of the patent: **16.10.2013**
(21) Application number: 12157101.2
(22) Date of filing: 27.02.2012
(51) Int. Cl.: H01Q 9/12, H01Q 19/30, H01Q 1/08, H01Q 1/12, H04N 5/64, H01Q 19/04

(54) **Television antenna with several cradles**
Fernsehantenne mit mehreren Armen
Antenne avec plusieurs bras

(30) Priority: 01.03.2011 IT BS20110024
(43) Date of publication of application: 05.09.2012
(73) Proprietor: Emme Esse S.p.A., 25025 Manerbio (BS) (IT)
(72) Inventor: Negretti, Andrea, 25025 Manerbio (BS) (IT)
(74) Representative: Pes, Matteo

(56) References cited:
- EP-A2- 1 199 771
- CN-U- 201 682 043
- CN-U- 201 717 355
- CN-Y- 201 336 367
- "Emme Esse Antenna System 3-line 3 boom", , 27 July 2011 (2011-07-27), XP055003705, http://www.emmeesse.it/en/product.asp?idpr od=170&idcat=432 Retrieved from the Internet: URL:http://www.emmeesse.it/en/product.asp? idprod=170&idcat=432

## Description

### Field Of The Invention

In its most general aspect the present invention refers to an antenna for radio - television signals and in particular to an antenna with several cradles.

### State Of The Art

Various antennas for radio - television signal are known, comprising one or more antenna cradles, or backbones, each composed of a tubular element having a predefined thickness and length provided with a plurality of pole - shaped transversal elements called directors, of predefined length and attached on every cradle in convenient positions.

In particular, in the case in object, three cradles of the above mentioned type are provided, of which one is central and two are side cradles, the respective antenna elements being joined thereto.

Usually the cradles are held together by a joint, commonly named rear joint, assembled on them at a first middle length of the central cradle and at respective end lengths of the side cradles, the rear joint being provided with holes for the crossing of a respective antenna element of the central cradle and side cradles.

The central cradle is substantially fixed in the rear joint and it can be connected by known means, for example by a clamp, to the antenna support or pole. On the contrary, the side cradles have to be positioned at a rear spacer and, in the operative condition of antenna use, the side cradles are spaced and diverge from the central cradle according to a prearranged angle.

The antenna is then completed with a locking bracket, also named front spacer, which is assembled on cradles at a second middle length of the central cradle and at lengths of side cradles at the ends opposing to which the spacer is assembled on.

The front spacer is provided too with holes for crossing a respective antenna element of the central cradle and side cradles and its function is basically to lock the side cradles in a position wide apart with respect to the central cradle.

Although the above antennas are substantially satisfactory from the operative point of view, they have the drawback of having a troublesome installation.

In particular, the spacer assembling is carried out by means of fixing screws for having a firm positioning of cradles, which needs to have an appropriate equipment during the installation.

Further, referring to the assembling of the locking bracket, it is also necessary to guarantee that the cradles are held in the correct position while the spacer is fastened. This obviously complicates the installation operations of the antenna, these then requiring the use of tools and frequently the intervention of skilled persons for the installation to be adequately carried out.

The technical problem the present invention is based on is then to provide an antenna for radio - television signals, in particular of the type with several cradles, which has to be easier to be installed without the need for the intervention of skilled persons, so that to overcome the drawbacks afore mentioned referring to the known art.

### Summary Of The Invention

Such technical problem is solved according to the invention by an antenna for radio - television signals of the type comprising a central cradle and one, two or more side cradles angularly movable relatively to said central cradle by a joint, each cradle being composed by a tubular element provided with holes distributed along the longitudinal extent, a plurality of pole - shaped elements connected to the tubular elements of the central cradle and lateral cradle/s at the respective holes and a locking bracket for locking said cradles with the respective pole - shaped elements in an operating position in which each side cradle is angularly spaced from the central cradle, said antenna being **characterized in that** said locking bracket may be angularly moved around a pole - shaped element of the central cradle between a folding position in which each side cradle is substantially moved near the central cradle and said operating position, said locking bracket also having hooking means removably engaging with the respective pole - shaped elements of each side cradle as said operating position is reached.

### Brief Description Of The Drawings

Further characteristics and advantages of the present invention will be more evident from a review of the following specification of a preferred, but not exclusive, embodiment, shown for illustration purposes only and without limitation, with the aid of the attached drawings, in which:
- Fig. 1 shows a perspective view of an antenna example according to the invention in the folded position;
- Fig. 2 shows a plan view of the antenna in Fig. 1;
- Fig. 3 shows an expanded view of an antenna part in Fig. 2 at the bracket or front joint;
- Fig. 4 shows a perspective view of the open antenna, as in use;
- Fig. 5 shows a plan view of part of the open antenna as in fig. 4;
- Fig. 6 shows a perspective view from the end of the open antenna as in Fig. 4;
- Figs. 7a and 7b show respectively a perspective view of the inside of the two separated elements intended for constituting the bracket or front joint;

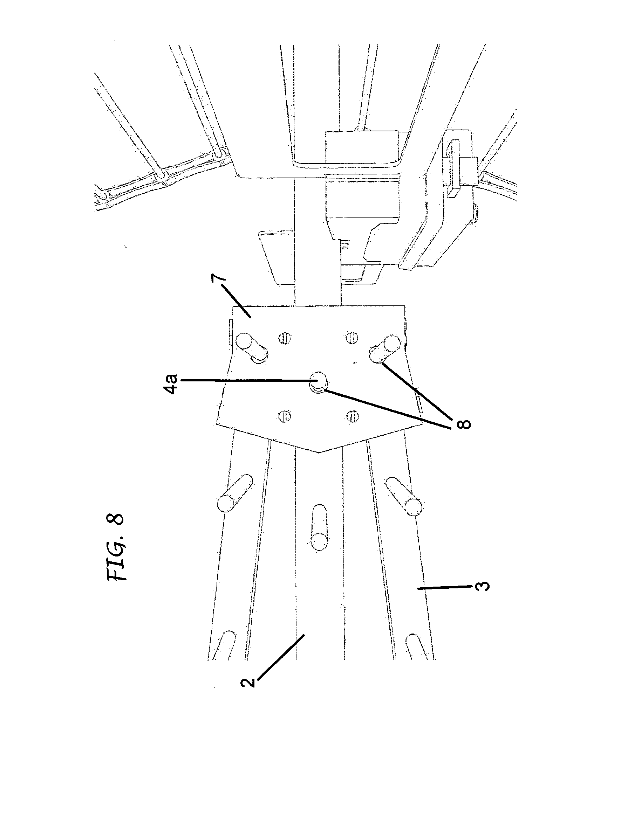

- Fig. 8 shows a plan view of part of the antenna in Fig. 1 at the rear joint;

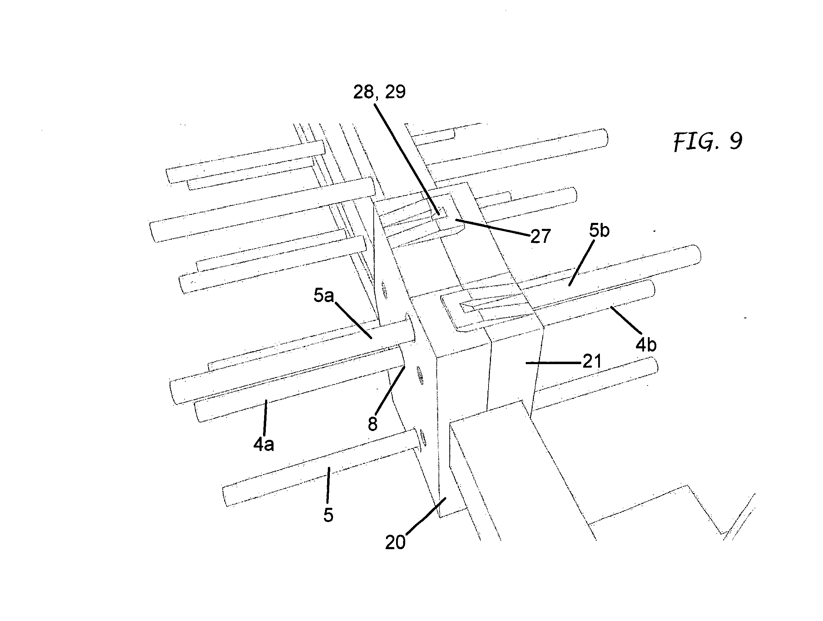

- Fig. 9 shows a perspective view of the rear joint in Fig. 8; and

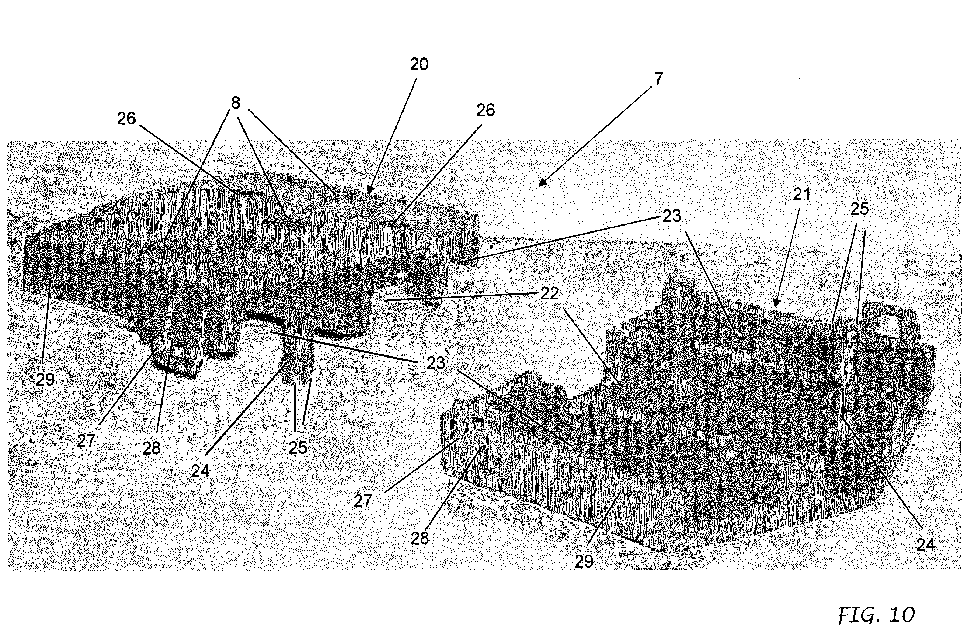

- Fig. 10 shows a perspective view of two separated elements intended for constituting the rear joint.

### Detailed description of the invention

Referring to the afore said figures, it is shown an example of antenna for radio - television signals according to the invention, totally indicated with the reference numeral 1 and comprising a central cradle 2 and two side cradles 3.

Each cradle 2 and 3 or backbone, is composed of a tubular element with predefined thickness and length made of a convenient metallic material, such as e.g. aluminium alloy with high mechanical strength, and it is provided with a plurality of transversal holes which are distributed along the longitudinal development of the tube.

The cradles 2 and 3 are coupled with respective antenna elements 4 and 5, which are composed essentially of pole - shaped elements with predefined length made of with a convenient metallic material, for example a wire in aluminium alloy with high mechanical strength.

In particular, the antenna elements 4 and 5 may be fitted in a respective engagement area in corresponding holes made on cradles 2 and 3 so that to obtain a forced coupling according to practices known in the art, as on the other hand described in another patent of the same applicant.

This allows a firm connection to be obtained over time and further optimal conditions of electrical performance.

In the present embodiment, each antenna element 4 or 5 is passing through two coaxial holes with transversal axis provided on sides opposite to the tubular element constituting the respective coupling cradle 2 or 3 and then it presents two opposing lengths 4a and 4b or 5a and 5b protruding from said sides.

The antenna 1 further comprises a joint totally indicated with the numeral 7, the so-called rear joint, which is assembled on cradles 2 and 3, as will be better explained hereinafter, at a middle length of the central cradle 2 and a length of the rear end of the side cradles 3.

In particular, the joint 7 is provided with holes 8 crossed by an antenna element 4 of the central cradle 2 and with two antenna elements 5 of the respective side cradles 3 which are next to the lengths of the cradles 2 and 3 coupling with the joint 7.

The central cradle 2 is substantially attached to the joint 7 and it may be connected by known means to the antenna support or pole (not shown).

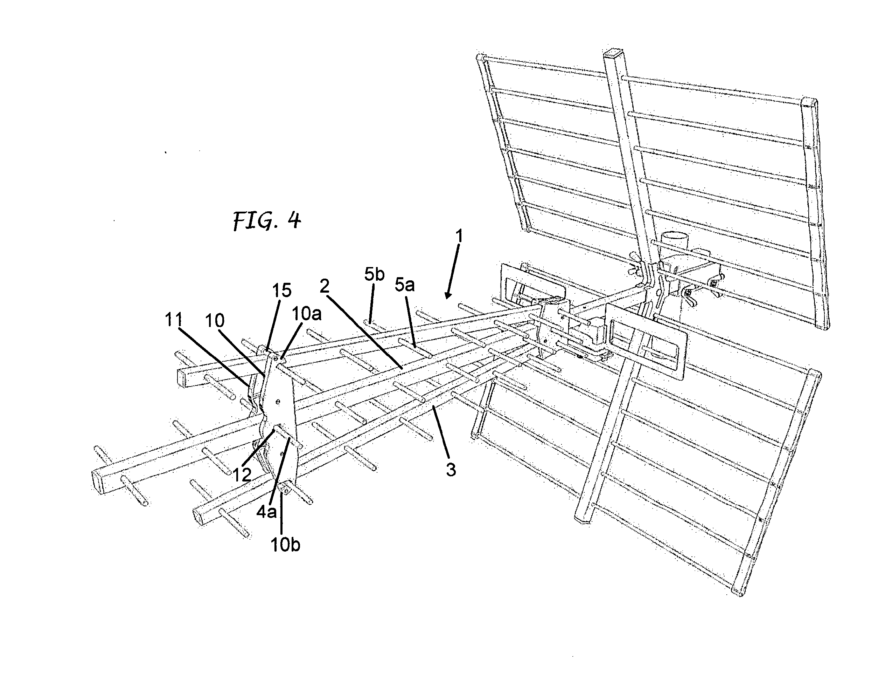

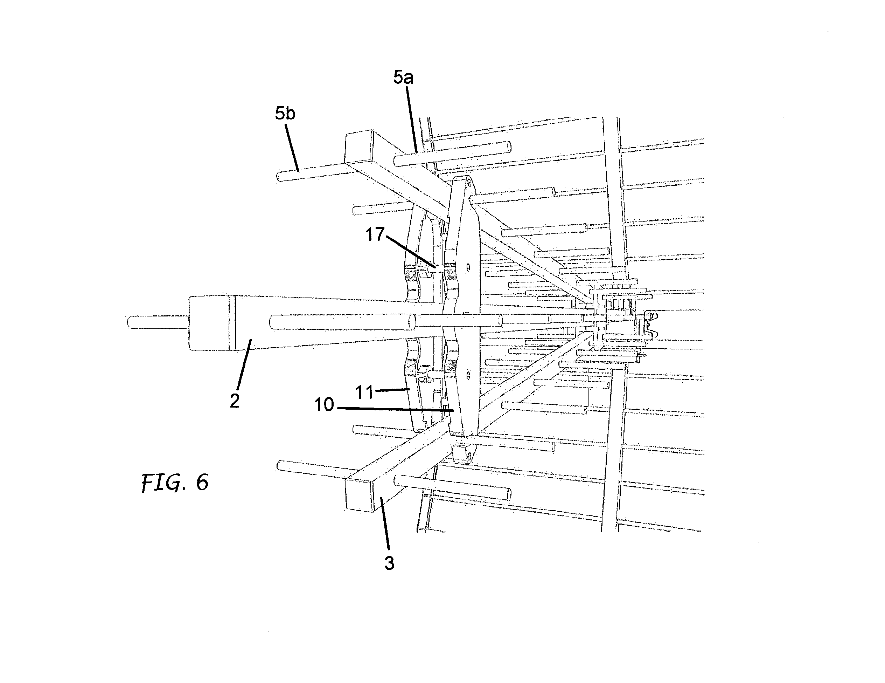

On the contrary the side cradles 3 can be moved angularly, for a prearranged little angle, around the respective antenna elements 5 crossing the joint 7 (then acting substantially as rotation pins) and, in the operating use condition of the antenna 1 (shown in figures 4-6), the side cradles 3 are angularly spaced from the central cradle 2.

The antenna 1 further comprises a locking bracket, totally indicated with numeral 9, also named front joint, which is combined with the cradles 2 and 3 at a middle front length of the central cradle 2 and at front end lengths of the side cradles 3.

According to an aspect of the present invention, the locking bracket 9 comprises two opposing and substantially bracket elements, precisely a first bracket element 10 and a second bracket element 11, assembled on opposed sides of the central cradle 2 and side cradles 3 and joined one another by interlocked connecting means hereinafter better explained.

Each bracket element 10 and 11 comprises a substantially central and coaxial eyelet 12 crossed by an antenna element 4 of the central cradle 2, in particular by a length 4a and 4b, respectively, of said antenna element 4 protruding from the assembling side of the bracket element 10 and 11.

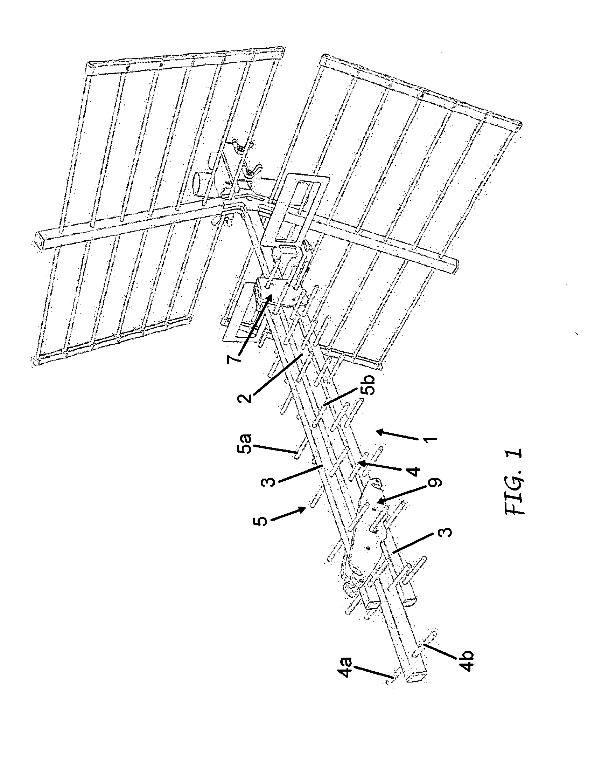

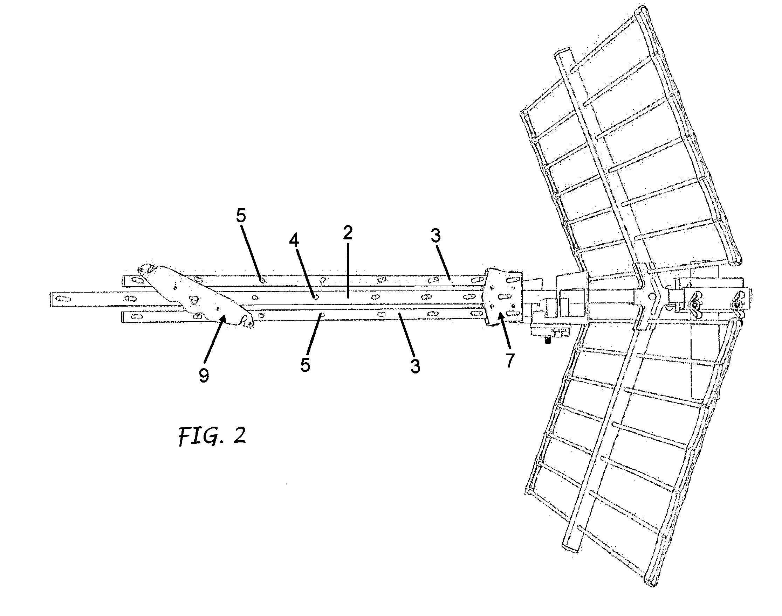

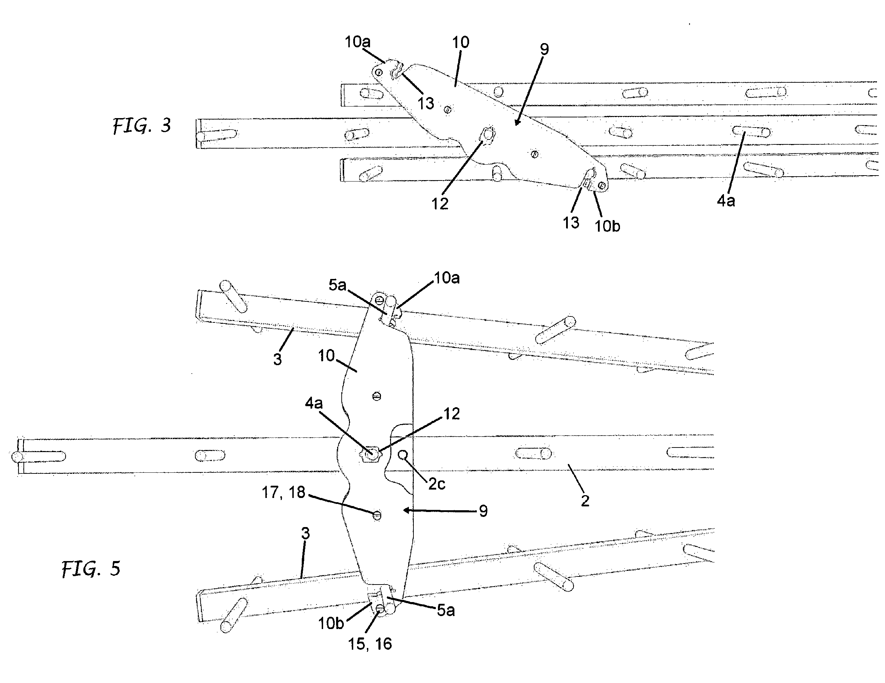

In such a way, both the bracket elements 10 and 11, once joined, are integral and rotating around the antenna elements 4 of the central cradle. In particular, the bracket elements 10 and 11 are rotatingly moving between a rest position in which the antenna 1 is folded (shown in figs. 1-3), i.e. with the side cradles 3 folded and substantially moved near the central cradle 2 and an operating condition of the antenna 1 (shown in figs. 3-6) in which on the contrary the side cradle 3 are angularly spaced from the central cradle 2 according to a prearranged angle.

Advantageously, the bracket elements 10 and 11 have hooking means removably engaging with the two respective pole - shaped elements 5 of the side cradles as said operating position is reached.

In the present embodiment, these hooking means are, for each bracket elements 10 and 11, two substantially hook - shaped opposing ending portions and provided with open seats on opposite sides of both the bracket elements 10 and 11, in which respective antenna elements 5 of the side cradles 3 removably engage as the operating position of the antenna 1 is reached.

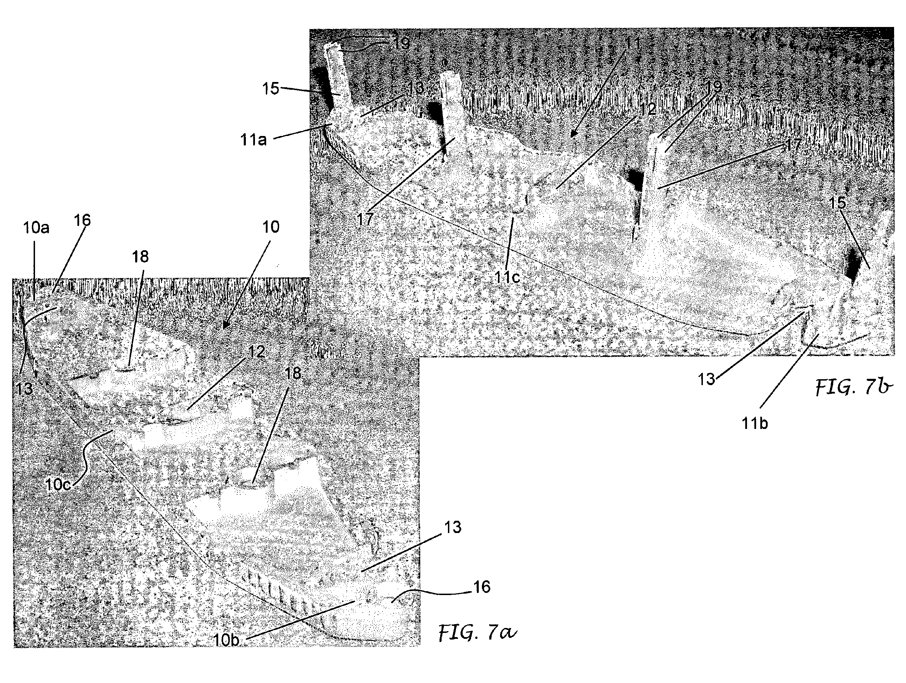

As shown in particular in figs. 7a, 7b, the bracket element 10 of the locking bracket 9 has two hook - shaped opposing ending portions 10a and 10b provided with respective seats 13 open on opposed sides of the bracket element 10 and facing towards respective lengths 5a protruding from the same side of two respective antenna elements 5 of the side cradles 3.

Similarly, the bracket element 11 of the locking bracket 9 has two hook - shaped opposing ending portions 11a and 11b provided with respective seats 13 open on opposed sides of the bracket element 11 and facing towards respective lengths 5b of said respective antenna elements 5 of the side cradles 3, said lengths 5b being protruding from the side opposed to the side said lengths 5a are protruding from.

The operating position is such that possible loads exercise a force substantially perpendicular to the disengaging direction of hooks and then accidental closures of installed antenna are avoided.

Regarding to the interlocked connecting means of the bracket elements 10 and 11, it has to be mentioned that they are a plurality of pegs made as a whole on one of the bracket elements (in the specific case the bracket element 11 - fig. 7b) engaging in corresponding holes provided on the other of the bracket element (in the specific case the bracket element 10 - fig. 7a).

In particular, in the present embodiment, are provided:
- ending mushroom - shaped pegs 15, made substantially at the ends of the hooked - shaped portions 11a and 11b of the bracket element 11, which engage in corresponding end holes 16 made at the ends of the hook - shaped portions 10a and 10b of the bracket element 10, and
- middle pegs 17 made on the bracket element 11 in the longitudinal direction sideways of the respective eyelet 12, which engage in corresponding middle holes 18 made on the bracket element 10 in the longitudinal direction sideways the respective eyelet 12.

Each peg 15 or 17 of the first bracket element 11 has, at the free end, at least one couple of elastically deformable fins 19 and shaped so that to obtain a substantially snap fitted coupling in respective holes 16 or 18 of the second bracket elements 10.

Advantageously, with the assembled locking bracket 9, the ending pegs 15 are located outside the side cradles 3 whereas the middle pegs 17 are located over said central cradle 2 so that the middle pegs 17 act substantially as dragging elements of the side cradles 3 during rotation of the locking bracket 9 around the antenna element 4 of the central cradle 2 crossing it from the folding position to the operating position (removal of the side cradles 3 from the central cradle 2) whereas the ending pegs 15 act as a limit stop for the angular movement of the side cradles 3 as the operating position is reached.

When the operating position of the antenna 1 is reached, the hooked - shaped ending portion 10a and 10b of the bracket element 10 engage the protruding lengths 5a of two respective antenna elements 5 of the side cradles 3 in seats 13, whereas the hook - shaped ending portions 11a and 11b of the opposing bracket element 11 engage the opposing protruding lengths 5b of said antenna elements 5 in seats 13.

In the meanwhile, the side cradles 3 abut externally on the ending pegs 15 of the locking bracket 9, so that these ending pegs 15 constitute said limit stop for the removal movement of the side cradles 3 from the central cradle 2.

In such a way, a firm, secure and accurate locking of cradles 2 and 3 is advantageously obtained in the operating position of the antenna 1.

In addition, for better stabilizing the operating position of the locking bracket 9 and avoiding an undue rotation thereof towards the non-operating position, which corresponds to an uncontrolled closure of the antenna, the two bracket elements 10 and 11 are preferably both provided (figs. 7a, 7b) with a pin 10c, 11c, respectively, resulting aligned with their central eyelet 12 and designed for snap fitting in a corresponding hole 2c made in the central cradle 2 (fig. 5).

It has to be noticed that such a locking is obtained easily and immediately, without the aid of screws as in the known art, and then by simple rotation operations of the locking bracket 9 for hooking the two antenna elements 5 of the side cradles 3 in the seats 13 of the bracket elements 10 and 11 of the locking bracket 9 and additional pins 10c, 11c in the hole of the central cradle.

Then, the rotation of the bracket 9 from the operating position to the folding position (with the approach of the side cradles 3 to the central cradle 2) may be intentional only, carried out by an action and force intended for disengaging the bracket elements 10 and 11 from the respective antenna elements 5 of the side cradles 3, and the additional pins 10c, 11c from the holes of the central cradle. With the subsequent rotation of the bracket 9 around the antenna element 4 of the central cradle 2 crossing it, the ending pegs 15 act substantially as dragging elements of said side cradles 3, whereas the middle pegs 17 act as limit stop for the angular movement of the side cradles 3 as the folding position is reached.

In particular, when the folding position of the antenna 1 is reached, the side cradles 3 abut against the middle pegs 17 (constituting then said limit stop for the movement of the side cradles 3 towards the side cradle 2) and they are substantially moved near the central cradle 3.

In such a way, it is possible to minimize the bulk of the antenna 1 in the rest position to the benefit of easiness and cost packaging reduction as well as the antenna transportation to the installation site.

According to another aspect of the present invention, the joint 7 is made to be able too to be assembled on cradles without the need of screws.

In particular, in the present embodiment, the joint 7 is composed of a box-shaped body comprising a higher shell 20 and a lower shell 21 connected one another and forming a substantially central seat 22 open on two opposing sides for the passage of the central cradle 2 and two side seats 23 open on only one of said sides for housing respective lengths of rear end of the side cradles 3.

The higher shell 20 and the lower shell 21 are provided with opposing coaxial holes 8 for the passage of an antenna element 4 of the central cradle 2 and two antenna elements 5 of the respective side cradles 3 of the antenna 1.

The side seats 23 are slightly flared towards the open side to allow the rotation of the side cradles 3 around the respective antenna elements 5 crossing the holes 8 inside a predetermined little angle.

Advantageously, the higher shell 20 and the lower shell 21 are joined one another by interlocked, preferably snap fitted, coupling means.

In the present embodiment, these means are a plurality of mushroom - shaped pegs 24, made as a whole both in the higher shell 20 and the lower shell 21 at the seat 22 for the central cradle 2, said pegs 24 of the higher shell 20 and the lower shell both having a couple of elastically deformable fins 25 snap fitting in corresponding coupling holes 26 made in the lower shell 21 and higher shell 20 respectively.

It has to be noticed that the assembly of the joint 7 is particularly easy and simple and without the screw aids, being sufficient to assemble the higher shell 20 and the lower shell 21 on opposite sides of the cradles 2 and 3 and taking care the holes 8 are crossed by respective antenna elements 4 and 5 of said cradles 2 and 3 and then the shells 20 and 21 are joined by the snap fitting of the pegs 24 in respective holes 26.

To guarantee a better solidity and resistance of the joint 7, the higher shell 20 and the lower shell 21 may be also provided externally with tabs 27 with eyelet 28 interlocking with respective reliefs 29 formed on the lower shell 21 and the higher shell 20, respectively.

From the foregoing, it is quite evident that the installation of the antenna 1 on the application site is perfectly easy and comfortable.

In this regard it has to be noticed that the antenna 1 may be conveniently pre-assembled in the factory with an extremely efficient productive process with the joint 7 and the locking bracket 9 assembled yet on cradles 2 and 3 and packaged in the folded position which guarantees the minimum bulk.

In the installation site it is sufficient then to attach the central cradle 2 to the antenna pole and rotate the locking bracket 9 up to engage the antenna elements 5 of the side cradles 3 in the hook - shaped ending portions of the bracket 9, thereby moving the antenna 1 into the operating position.

Then, the installation of the antenna 1 according to the invention may be carried out easily by means of unskilled persons.

A person skilled of the art will be able to make various changes and variations to the antenna above described to satisfy specific and contingent requirements, on the other hand all contained in the protection scope of the invention, as defined in the following claims.

In particular the preceding description has been made referring to an antenna having a central cradle and two side cradles; but this does not exclude the same assembling and disassembling methods to be applied also to antennas having one main/ central cradle and one or more than two additional/ side cradles, correspondingly setting up both the rear joint and the locking bracket.

## Claims

1. Antenna (1) for radio - television signals of the type comprising a central cradle (2) and one, two or more side cradles (3) angularly movable relatively to said central cradle (2) at a rear joint (7), each cradle (2; 3) being composed by a tubular element provided with holes distributed along the longitudinal extent, a plurality of pole - shaped elements (4; 5) connected to the tubular elements of the central cradle (2) and side cradle/s (3), and a locking bracket (9) for retaining said cradles (2; 3) with the respective pole - shaped elements (4; 5) in an operating position in which each side cradle (3) is angularly spaced from the central cradle (2), said antenna (1) being **characterized in that** said locking bracket (9) may be swung around a pole - shaped element (4) of the central cradle (2) between a folding position in which each side cradle (3) is substantially moved near the central cradle (2) and said operating position, said locking bracket (9) also having hooking means (10a, 10b, 11a, 11b) removably engaging with the respective pole - shaped elements (5) of each side cradle (3) as said operating position is reached.

2. Antenna (1) according to claim 1, wherein said mounting bracket (9) comprises a first bracket element (10) and a second bracket element (11) mounted on opposite sides of said central cradle (2) and each side cradle (3) and joined one to another, said first bracket element (10) and second bracket element (11) being provided with substantially central and coaxial respective eyelets (12) crossed by a pole - shaped element (4) of the central cradle (2).

3. Antenna (1) according to claim 2, wherein said hooking means (10a, 10b; 11a, 11b) comprise, for each first bracket element (10) or second bracket element (11), at least one substantially hook - shaped ending portion provided with respective seats (13) open on opposite sides of the respective first bracket element (10) or second bracket element (11) in each of which a respective pole - shaped element (5) of one of said side cradles (3) is removably engaged as said operating position is reached.

4. Antenna (1) according to claim 2 or 3, wherein said first bracket element (10) and said second bracket element (11) are joined one to another by interlocked, preferably snap fitted, coupling means.

5. Antenna (1) according to claim 4, wherein said interlocked coupling means comprise a plurality of pegs (15, 17) forming a single piece with one (11) of said bracket elements (10, 11) engaging in corresponding holes (16, 18) formed on the other (10) of said bracket elements (10, 11).

6. Antenna (1) according to claim 5, wherein said plurality of pegs comprises ending pegs (15) formed substantially at the ends of said hook - shaped portions (11a, 11b) and middle pegs (17) formed from opposite sides respect to said eyelet (12), said ending pegs (15) being located outside of a respective side cradle (3) and said middle pegs (17) being located from opposite sides respect to said central cradle (2) so that said middle pegs (17) substantially drag said side cradle/s (3) during rotation of the said locking bracket (9) from said folding position to said operating position while the ending pegs (15) act as a limit stop for the angular movement of the side cradle/s (3) as said operating position is reached and vice versa said ending pegs (15) substantially drag said side cradle/s (3) during the rotation of said locking bracket (9) from said operating position to said folding position while said middle pegs (17) act as a limit stop for the angular movement of the side cradle/s (3) as the folding position is reached.

7. Antenna according to any one of claims 4 - 6, wherein said first bracket element (10) and said second bracket element (11) each have one additional pin (10c, 11c) configured to engage in a corresponding hole (2c) provided in the central cradle (2) when the locking bracket is in the operating position, the additional pin being aligned with the eyelet (12) of the respective bracket element.

8. Antenna (1) according to any one of the preceding claims, wherein said joint (7) is composed of a box-shaped body comprising a higher shell (20) and a lower shell (21) provided with opposing coaxial holes (8) for the passage of a pole - shaped element (4) of said central cradle (2) and a pole - shaped element (5) of each respective side cradle (3), said higher shell (20) and said lower shell (21) forming a substantially central seat (22) for the passage of said central cradle (2) and one, two or more side seats (23) for housing each of a respective length of the rear end of a side cradle (3) and being joined by interlocked, preferably snap fitted, coupling means.

9. Antenna (1) according to claim 8, wherein said coupling means comprise:
- a plurality of pegs (24) forming a single piece with the higher shell (20) and/or lower shell (21) preferably snap fitting into corresponding coupling holes (26) formed in the lower shell (21) and/or higher shell (20) and in case
- a plurality of tabs (27) provided with eyelet (28) forming a single piece with the outer sides of the higher shell (20) and/or lower shell (21) interlocking with corresponding reliefs (29) formed on the lower shell (21) and/or higher shell (20).

10. Locking bracket (9) for an antenna (1) according to any one of the preceding claims comprising a first bracket element (10) and a second bracket element (11) joined together in use preferably by interlocked coupling means, said first bracket element (10) and second bracket element (11) being provided with respective substantially central and coaxial eyelets (12) for the crossing of a pole - shaped element (4) of the central cradle (2) of said antenna (1) and one, two or more ending portions (10a, 10b; 11a, 11b), substantially hook - shaped, provided with respective seats (13) open on opposite sides of the respective first bracket element (10) or second bracket element (11), each for the removable engagement with respective pole - shaped elements (5) of a corresponding side cradle (3) as the operating position of said antenna (1) is reached.

11. Antenna (1) according to any one of the preceding claims from 1 to 8, comprising a joint (7) provided with a higher shell (20) and a lower shell (21) provided with opposing coaxial holes (8) for the passage of a pole - shaped element (4) of the central cradle (1) of said antenna (1) and one, two or more pole - shaped elements (5) each of a respective side cradle (3), said higher shell (20) and said lower shell (21) forming a substantially central seat (22) for the passage of said central cradle (2) and one, two or more side seats (23) each for housing a respective length of the end of the respective side cradles (3) and being joined by interlocked, preferably snap fitted, coupling means.

## Patentansprüche

1. Antenne (1) für Radio- und Fernsehsignale des Typs umfassend einen Zentralträger (2) und einen, zwei oder mehr Seitenträger (3), die relativ zum besagten Zentralträger (2) an einem Hintergelenk (7) schwenkbar sind, wobei jeder Träger (2; 3) aus einem mit über die Längsausdehnung verteilten Öffnungen versehenen rohrförmigen Element besteht, eine Vielzahl von polförmigen Elementen (4; 5), die an den rohrförmigen Elementen des Zentralträgers (2) und des/der Seitenträgers/Seitenträger (3) angeschlossen sind, und einen Verriegelungsbügel (9) zum Halten der besagten Träger (2, 3) mit den entsprechenden polförmigen Elementen (4; 5) in einer Betriebsstellung, in welcher jeder Seitenträger (3) sich in einem Winkelabstand zu dem Zentralträger (2) befindet, wobei die besagte Antenne (1) **dadurch gekennzeichnet ist, dass** der besagte Verriegelungsbügel (9) um ein polförmiges Element (4) des Zentralträgers (2), zwischen einer Faltstellung, in welcher jeder einzelne Seitenträger (3) im Wesentlichen in der Nähe des Zentralträgers (2) verschoben ist, und der besagten Betriebsstellung verschwenkbar ist, wobei der besagte Verriegelungsbügel (9) auch Hakenmittel aufweist (10a, 10b, 11a, 11b), die bei Erreichung der besagten Betriebsstellung lösbar in den entsprechenden polförmigen Elementen (5) jedes Seitenträgers (3) eingreifen.

2. Antenne (1) nach Anspruch 1, wobei der besagte Montagebügel (9) ein erstes Bügelelement (10) und ein zweites Bügelelement (11) umfasst, die auf gegenüberliegenden Seiten des besagten Zentralträgers (2) und jedes Seitenträgers (3) angebracht und miteinander verbunden sind, wobei das besagte erste Bügelelement (10) und das besagte zweite Bügelelement (11) mit im Wesentlichen zentralen und einander koaxialen Ösen (12) versehen sind, die von einem polförmigen Element (4) des Zentralträgers (2) durchquert werden.

3. Antenne (1) nach Anspruch 2, wobei die besagten Hakenmittel (10a, 10b; 11a, 11b) umfassen, für jeweils das erste Bügelelement (10) oder das zweite Bügelelement (11), mindestens einen im Wesentlichen hakenförmigen Endabschnitt, der mit entsprechenden Aufnahmen (13) versehen ist, die auf gegenüberliegenden Seiten des jeweiligen ersten Bügelelementes (10) oder zweiten Bügelelementes (11) geöffnet sind und in die bei Erreichung der besagten Betriebsstellung jeweils ein polförmiges Element (5) einer der besagten Seitenträger (3) lösbar eingreift.

4. Antenne (1) nach Anspruch 2 oder 3, wobei das besagte erste Bügelelement (10) und das besagte zweite Bügelelement (11) durch ineinander gerastete, bevorzugt ineinander eingeschnappte Kupplungsmittel miteinander verbunden sind.

5. Antenne (1) nach Anspruch 4, wobei die besagten ineinander gerasteten Kupplungsmittel umfassen eine Vielzahl von Zapfen (15, 17), die mit einem (11) der besagten Bügelelemente (10, 11) ausgebildet sind und in entsprechende in dem anderen (10) der besagten Bügelelemente (10, 11) gebildete Löcher (16, 18) eingreifen.

6. Antenne (1) nach Anspruch 5, wobei die besagte Vielzahl von Zapfen Endzapfen (15) umfasst, die im Wesentlichen an den Enden der besagten hakenförmigen Abschnitte (11a, 11b) geformt sind, und Mittelzapfen (17), die aus gegenüberliegenden Seiten bezüglich der besagten Öse (12) geformt sind, und die besagten Endzapfen (15) außerhalb des jeweiligen Seitenträgers (3) positioniert sind und die besagten Mittelzapfen (17) auf gegenüberliegenden Seiten bezüglich des besagten Zentralträgers (2) so angeordnet sind, dass die besagten Mittelzapfen (17) den/die besagten Seitenträger (3) bei der Drehung des besagten Verriegelungsbügels (9) von der besagten Faltstellung zur besagten Betriebsstellung im Wesentlichen mitnehmen, während die Endzapfen (15) als Begrenzungsanschlag für die Schwenkbewegung der/des Seitenträger/s (3) bei Erreichung der Betriebsstellung dienen und umgekehrt die besagten Endzapfen (15) den/die besagten Seitenträger (3) bei der Drehung des besagten Verriegelungsbügels (9) von der besagten Betriebsstellung zur besagten Faltstellung im Wesentlichen mitnehmen, während die besagten Mittelzapfen (17) als Begrenzungsanschlag für die Schwenkbewegung der/des Seitenträger/s (3) bei Erreichung der Faltstellung dienen.

7. Antenne nach einem der vorhergehenden Ansprüche 4 - 6, wobei das besagte erste Bügelelement (10) und das besagte zweite Bügelelement (11) jeweils einen zusätzlichen Stift (10c, 11c) aufweisen, der zum Eingreifen in ein entsprechendes, im Zentralträger (2) vorgesehenes Loch (2c) eingerichtet ist, wenn der Verriegelungsbügel sich in der Betriebsstellung befindet, wobei der zusätzliche Stift mit der Öse (12) des entsprechenden Bügels fluchtet.

8. Antenne (1) nach einem der vorhergehenden Ansprüche, wobei das besagte Gelenk (7) aus einem kastenförmigen Körper besteht, umfassend eine obere Schale (20) und eine untere Schale (21), die mit gegenüberliegenden koaxialen Löchern (8) versehen sind, zum Hindurchführen eines polförmigen Elementes (4) des besagten Zentralträgers (2) und eines polförmigen Elementes (5) jedes Seitenträgers (3), wobei die besagte obere Schale (20) und die besagte untere Schale (21) im Wesentlichen einen Zentralsitz (22), zum Durchgang des besagten Zentralträgers (2), und ein, zwei oder mehr Seitensitze (23) zum Aufnehmen jeweils einer entsprechenden Länge des Hinterendes eines Seitenträgers (3) bilden und durch ineinander gerastete, bevorzugt ineinander eingeschnappte Kupplungsmittel miteinander verbunden sind.

9. Antenne (1) nach Anspruch 8, wobei die besagten Kupplungsmittel umfassen:
- eine Vielzahl von Zapfen (24), die mit der oberen Schale (20) und/oder mit der unteren Schale (21) einstückig ausgebildet sind und vorzugsweise in entsprechende, in der unteren Schale (21) und/oder oberen Schale (20) geformten Kupplungslöcher (26) eingeschnappt sind und fallweise
- eine Vielzahl von Laschen (27) mit Aussparung (28), die mit der Außenseite der oberen Schale (20) und/oder der unteren Schale (21) einstückig ausgebildet sind und mit entsprechenden, auf der unteren Schale (21) und/oder oberen Schale (20) gebildeten Erhöhungen (29) eingerastet sind.

10. Verriegelungsbügel (9) für eine Antenne (1) nach einem der vorhergehenden Ansprüche, umfassend ein erstes Bügelelement (10) und ein zweites Bügelelement (11), die bei Benutzung vorzugsweise durch ineinander gerastete Kupplungsmittel miteinander verbunden sind, wobei das besagte erste Bügelelement (10) und das besagte zweite Bügelelement (11) jeweils mit im Wesentlichen zentralen und koaxialen Ösen (12) zum Durchgang des polförmigen Elementes (4) des Zentralträgers (2) der besagten Antenne (1) versehen sind und ein, zwei oder mehr im Wesentlichen hakenförmige Endabschnitte (10a, 10b; 11a, 11b) aufweisen, die mit entsprechenden Aufnahmen (13) versehen sind, welche auf gegenüberliegenden Seiten des jeweiligen ersten Bügelelementes (10) oder zweiten Bügelelementes (11) geöffnet sind und zum lösbaren Eingriff mit jeweiligen polförmigen Elementen (5) des entsprechenden Seitenträgers (3) bei Erreichung der Betriebsstellung der besagten Antenne (1) vorgesehen sind.

11. Antenne (1) nach einem der vorhergehenden Ansprüche 1 - 8, umfassend ein mit einer oberen Schale (20) und einer unteren Schale (21) versehenes Gelenk (7), das gegenüberliegende koaxiale Löcher (8), zum Hindurchführen eines polförmigen Elementes (4) des Zentralträgers (1) der besagten Antenne (1) und ein, zwei oder mehr polförmige Elemente (5) jeweils eines entsprechenden Seitenträgers (3) aufweist, wobei die besagte obere Schale (20) und die besagte untere Schale (21) im Wesentlichen einen Zentralsitz (22), zum Durchgang des besagten Zentralträgers (2), und ein, zwei oder mehr Seitensitze (23), jeweils zum Aufnehmen einer entsprechenden Länge des Endes der entsprechenden Seitenträger (3) bilden und durch ineinander gerastete, bevorzugt ineinander eingeschnappte Kupplungsmittel miteinander verbunden sind.

## Revendications

1. Antenne (1) pour signaux de radio - télévision du type comprenant un mât central (2) et une, deux ou plusieurs mâts latéraux (3) mobiles angulairement relativement audit mât central (2) au niveau d'une articulation postérieure (7), chaque mât (2, 3) étant constitué par un élément tubulaire muni des trous répartis le long de l'étendue longitudinale, une pluralité des éléments (4, 5) en forme des tiges connectés à les éléments tubulaires du mât central (2) et de/ s mât/ s latéral/ latéraux (3), et une fixation de verrouillage (9) pour retenir lesdits mâts (2, 3) avec les respectifs éléments (4, 5) en forme des tiges dans une position de fonctionnement dans laquelle chaque mât (3) est angulairement espacé de le mât central (2), ladite antenne (1) étant **caractérisé en ce que** ladite fixation de verrouillage (9) est basculant autour un élément (4) en forme de tige du mât central (2) entre une position de pliage dans laquelle chaque mât latéral (3) est substantiellement déplacé près du mât central (2) et ladite position de fonctionnement, ledit fixation de verrouillage (9) comportant également des moyens d'accrochage (10a, 10b, 11a, 11b) qui se joignent en manière amovible avec les respectifs éléments (5) en forme des tiges de chaque mât latéral (3) lorsque ladite position de fonctionnement est atteinte.

2. Antenne (1) selon la revendication 1, dans lequel ledit fixation de montage (9) comprend un premier élément de fixation (10) et un second élément de fixation (11) montés sur les côtés opposés dudit mât central (2) et chaque mât latéral (3) et joints l'un à l'autre, ledit premier élément de fixation (10) et second élément de fixation (11) étant munis des respectifs oeillets substantiellement centraux et coaxiaux (12) traversés par un élément (4) en forme de tige de le mât central (2).

3. Antenne (1) selon la revendication 2, dans lequel lesdits moyens d'accrochage (10a, 10b, 11a, 11b) comprennent, pour chaque premier élément de fixation (10) ou deuxième élément de fixation (11), au moins un portion de extrémité substantiellement en forme de crochet munie avec des respectifs sièges (13) ouvertes sur les côtés opposés du respectif premier élément de fixation (10) ou deuxième élément de fixation (11) dans chacune desquelles un respectif élément (5) en forme de tige d'un desdits mâts latéraux (3) est joint en manière amovible lorsque ladite position de fonctionnement est atteinte.

4. Antenne (1) selon la revendication 2 ou 3, dans lequel ledit premier élément de fixation (10) et ledit second élément de fixation (11) sont joints les uns aux autres par des moyens de couplage à emboîtement, de préférence avec encliquetage.

5. Antenne (1) selon la revendication 4, dans lequel lesdits moyens de couplage à emboîtement comprennent une pluralité des pieux (15, 17) formant une seule pièce avec un (11) desdits éléments de fixation (10, 11) qui se joignent dans correspondants trous (16, 18) formés sur l'autre (10) desdits éléments de fixation (10, 11).

6. Antenne (1) selon la revendication 5, dans lequel ladite pluralité des pieux comprend pieux de extrémité (15) formés substantiellement aux extrémités desdites portions en forme de crochet (11a, 11b) et des pieux intermédiaires (17) formés à partir de côtés opposés par rapport audit oeillet (12), lesdites pieux de extrémité (15) étant situés à l'extérieur d'un respectif mât central (3) et lesdits pieux intermédiaires (17) étant situés des côtés opposés par rapport dudit mât central (2) de telle sorte que lesdits pieux intermédiaires (17) substantiellement traînent ledit mât/s latéral/ latéraux (3) pendant la rotation de ladite fixation de verrouillage (9) à partir de ladite position de pliage à ladite position de fonctionnement tandis que les pieux de extrémité (15) agit comme une butée de fin de course pour le déplacement angulaire de/s mât/s latéral/ latéraux (3) en tant que ladite position de fonctionnement est atteinte et vice versa lesdits pieux de extrémité (15) substantiellement traînent ledit/s mât/s latéral/ latéraux (3) au cours de la rotation de ladite fixation de verrouillage (9) à partir de ladite position de fonctionnement à ladite position de pliage alors que lesdits pieux intermédiaires (17) agit comme une butée de fin de course pour le déplacement angulaire de/s mât/s latéral/ latéraux (3) lorsque la position de pliage est atteinte.

7. Antenne selon l'une quelconque des revendications 4-6, dans lequel ledit premier élément de fixation (10) et ledit second élément de fixation (11) sont pourvus chacun d'un pivot supplémentaire (10c, 11c) destiné à se joindre dans un trou correspondant (2c) prévue dans le mât central (2) lorsque la fixation de verrouillage est dans la position de fonctionnement, le pivot supplémentaire étant aligné avec le oeillet (12) du respectif premier élément de fixation.

8. Antenne (1) selon l'une quelconque des revendications précédentes, dans lequel ledit pivot (7) est constitué par un corps en
forme de boîte comprenant une coquille supérieure (20) et une coquille inférieure (21) munies de trous coaxiaux opposés (8) pour le passage d'un élément (4) en forme de tige dudit mât central (2) et un élément (5) en forme de tige de chacun respectif mât latéral (3), ladite coquille supérieure (20) et ladite coquille inférieure (21) formant un siège substantiellement central (22) pour le passage dudit mât central (2) et une, deux ou plusieurs sièges latéraux (23) pour le logement chacune d'une partie respective de l'extrémité postérieure d'un mât latéral (3) et étant joints par des moyens de couplage à emboîtement, de préférence avec encliquetage.

9. Antenne (1) selon la revendication 8, dans lequel lesdits moyens de couplage comprennent:
• une pluralité de pieux (24) formée intégralement dans la coquille supérieure (20) et/ ou dans la coquille inférieure (21) qui, de préférence, se joignent avec encliquetage dans des trous correspondants (26) formés dans la coquille inférieure (21) et ou dans la coquille supérieure (20) et, éventuellement,
• une pluralité de pattes (27) munies de oeillet (28) formée d'une seule pièce sur les côtés extérieurs de la coquille supérieure (20) et/ou de la coquille inférieure (21) qui s'accouplent avec emboîtement avec des reliefs correspondants (29) formés sur la coquille inférieure (21) et/ ou sur la coquille supérieure (20).

10. Fixation de verrouillage (9) pour une antenne (1) selon l'une quelconque des revendications précédentes, comprenant un premier élément de fixation (10) et un deuxième élément de fixation (11) joints ensemble alors que en utilisation de préférence par moyens de couplage à emboîtement, lesdits premier élément de fixation (10) et deuxième élément de fixation (11) étant munis des respectifs oeillets substantiellement centraux et coaxiaux (12) pour le passage d'un élément (4) en forme de tige de le mât central (2) de ladite antenne (1) et une, deux ou plusieurs portions terminales (10a, 10b, 11a, 11b), substantiellement en forme de crochet, munies avec des sièges respectifs (13) ouvertes sur les côtés opposés du respectif premier élément de fixation (10) ou du second élément de fixation (11), chacune pour être joints en manière amovible avec les respectifs éléments (5) en forme de tige d'un relatif mât latéral (3) lorsque ladite position de fonctionnement de ladite antenne (1) est atteinte.

11. Antenne (1) selon l'une quelconque des revendications précédentes de 1 à 8, comprenant une articulation (7) munie d'une coquille supérieure (20) et d'une coquille inférieure (21) munies de trous coaxiaux opposés (8) pour le passage d'un élément (4) en forme de tige du mât central (1) de ladite antenne (1) et d'une, deux ou plusieurs éléments (5) en forme de tige chacun d'un respectif mât latéral (3), ladite coquille supérieure (20) et ladite coquille inférieure (21) formant un siège substantiellement central (22) pour le passage dudit mât central (2) et un, deux ou plusieurs sièges latéraux (23) chacun pour le logement d'une partie respective de l'extrémité des respectifs mâts latéraux (3) et étant joints par des moyens de couplage à emboîtement, de préférence avec encliquetage.
